# EUROPEAN PATENT SPECIFICATION

(11) **EP 2 600 565 B1**
(45) Date of publication and mention of the grant of the patent: **06.01.2016**
(21) Application number: 10855190.4
(22) Date of filing: 15.09.2010
(51) Int. Cl.: H04L 12/24, G06F 11/20

(54) **DISASTER TOLERANCE SERVICE SYSTEM AND DISASTER TOLERANCE METHOD**
SYSTEM FÜR KATASTROPHENTOLERANZDIENST UND KATASTROPHENTOLERANZVERFAHREN
SYSTÈME DE SERVICE TOLÉRANT AUX SINISTRES ET PROCÉDÉ DE TOLÉRANCE AUX SINISTRES

(30) Priority: 26.07.2010 CN 201010245165
(43) Date of publication of application: 05.06.2013
(73) Proprietor: ZTE Corporation, Shenzhen, Guangdong 518057 (CN)
(72) Inventor: ZHANG, Chao, Guangdong 518057 (CN); WANG, Hui, Guangdong 518057 (CN); ZHAO, Qingchun, Guangdong 518057 (CN); WANG, Wei, Guangdong 518057 (CN); SHI, Jian, Guangdong 518057 (CN); ZHANG, Daoping, Guangdong 518057 (CN); ZHANG, Lingdong, Guangdong 518057 (CN); SUN, Lei, Guangdong 518057 (CN)
(74) Representative: Onsagers AS
(86) International application number: PCT/CN2010/076969
(87) International publication number: WO 2012/012962

(56) References cited:
- CN-A- 1 859 219
- CN-A- 101 547 084
- CN-A- 101 621 413
- CN-A- 101 729 279
- CN-A- 101 729 279
- US-A1- 2008 126 501
- US-A1- 2009 138 753

## Description

### Technical Field

The present invention relates to the field of communications, and more particularly to a disaster tolerance service system and a disaster tolerance method.

### Background

In the field of telecommunications, service platforms of most operators are constructed independently and separately. Each service platform needs to construct independent public modules, such as a storage module, an external interface, an operation maintenance unit and a charging unit etc., for each service.

In order to avoid repeated construction of the above public modules to further avoid overlapping investment, operators aim at obtaining the most benefit with the minimum investment at the present stage no matter in the construction of new services or in the expansion or replacement of existing services, and this target can be realized by a multi-service integrated unified platform.

The multi-service integrated unified platform can reduce various costs and improve a resource utilization rate on a premise of ensuring a stability and reliability of products. However, a one-to-one disaster tolerance mode is applied by an existing multi-service integrated unified platform after a service of the multi-service integrated unified platform is malfunctioned, i.e. a disaster tolerance mode in which multiple disaster tolerance servers are applied and each of the multiple disaster tolerance servers perform disaster tolerance for a specific service. Thus, the reliability of the disaster tolerance mode is low because of the incapability of ensuring sufficient disaster tolerance ability for each service. In addition, the use of the multiple disaster tolerance servers in the disaster tolerance mode greatly increases the cost spent on equipment.

CN101729279A discloses a disaster tolerance method for an enterprise mobile information system.

US 2008/0126501 A1 discloses a service take-over method based on apparatus disaster recovery, service transfer apparatus and backup machine and US 2009/0138753 A1 discloses a server switching method and server system equipped therewith.

### Summary

The present invention, which is defined in detail in the appended independent claims 1 and 5, provides a disaster tolerance service system and a disaster tolerance method, which can solve the problem in related technologies that a disaster tolerance service system adopting a one-to-one disaster tolerance mode is incapable of ensuring sufficient disaster tolerance ability for each service.

A disaster tolerance service system is provided according to an aspect of the present invention.

The disaster tolerance service system according to the present invention comprises: a fault detection module, configured to detect whether a service and/or a service server for operating the service are/is in a fault state; a server management module, configured to determine a disaster tolerance server for replacing the service server if a detection result is that the service and/or the service server for operating the service are/is in the fault state; a service install/uninstall module, configured to install the service on the disaster tolerance server; and a service operation module, configured to operate the service on the disaster tolerance server.

Preferably, the server management module comprises: an obtaining sub-module, configured to obtain an idle disaster tolerance server; and a determining sub-module, configured to determine the disaster tolerance server for replacing the service server according to a performance of the idle disaster tolerance server.

Preferably, the disaster tolerance service system further comprises: a storage module, configured to store state information of the service server and service information of the service, wherein the state information of the service server comprises at least one of the followings: state information for indicating that the service server operates normally, state information for indicating that the service server has an operation fault and state information for indicating that the service server is idle; the service information of the service comprises at least one of the followings: a service node of the service, a module number of the service, a service type of the service, a version of the service and a catalogue of the service.

Preferably, the disaster tolerance service system further comprises: a state display module, configured to display the state information of the service server and the service information of the service; and a state alarm module, configured to generate an alarm when the detection result is that the service and/or the service server for operating the service are/is in the fault state.

Preferably, the service install/uninstall module is further configured to uninstall the service from the service server in the fault state.

A disaster tolerance method is provided according to another aspect of the present invention.

The disaster tolerance method according to the present invention comprises: detecting whether a service server in a disaster tolerance service system and/or a service operated on the service server are/is in a fault state; determining a disaster tolerance server for replacing the service server if a detection result is that the service server in the disaster tolerance service system and/or the service operated on the service server are/is in the fault state; installing the service on the disaster tolerance server; and operating the service on the disaster tolerance server.

Preferably, determining the disaster tolerance server for replacing the service server comprises: obtaining an idle disaster tolerance server in the disaster tolerance service system; determining the disaster tolerance server for replacing the service server according to a performance of the idle disaster tolerance server.

Preferably, before detecting whether the service server in the disaster tolerance service system and/or the service operated on the service server are/is in the fault state, the method further comprises: storing state information of the service server and service information of the service, wherein the state information of the service server comprises at least one of the followings: state information for indicating that the service server operates normally, state information for indicating that the service server has an operation fault and state information for indicating that the service server is idle; the service information of the service comprises at least one of the followings: a service node of the service, a module number of the service, a service type of the service, a version of the service and a catalogue of the service.

Preferably, before detecting whether the service server in the disaster tolerance service system and/or the service operated on the service server are/is in the fault state, the method further comprises: displaying the state information of the service server and the service information of the service.

Preferably, after detecting whether the service server in the disaster tolerance service system and/or the service operated on the service server are/is in the fault state, the method further comprises: generating an alarm when the detection result is that the service server in the disaster tolerance service system and/or the service operated on the service server are/is in the fault state.

By using the present invention, a service is installed on a disaster tolerance server to extend the range of services for which the disaster tolerance server can perform disaster tolerance, thus solving the problem in related technologies that a disaster tolerance service system adopting a one-to-one disaster tolerance mode is incapable of ensuring sufficient disaster tolerance ability for each service, improving the disaster tolerance reliability and reducing the cost spent on the disaster tolerance service system.

### Brief Description of the Drawings

Drawings, provided for further understanding of the present invention and forming a part of the specification, are used to explain the present invention together with embodiments of the present invention rather than to limit the present invention, wherein:
Fig. 1 is a structural block diagram of a disaster tolerance service system according to an embodiment of the present invention;
Fig. 2 is a schematic diagram of a disaster tolerance service system according to a preferable embodiment of the present invention;
Fig. 3 is a flowchart of a disaster tolerance method according to an embodiment of the present invention; and
Fig. 4 is an interaction flowchart of a disaster tolerance method according to a preferable embodiment of the present invention.

### Detailed Description of the Embodiments

The present invention will be described in details below with reference to the accompanying drawings and in combination with the embodiments. It should be noted that, if there is no conflict, the embodiments of the present invention and the characteristics in the embodiments can be combined with one another.

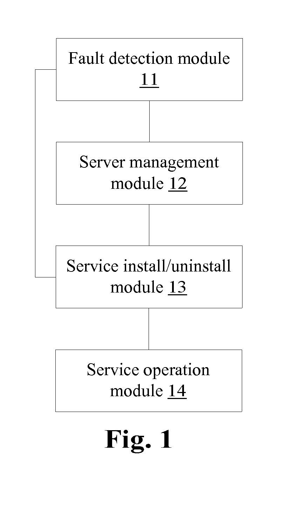

According to an embodiment of the present invention, a disaster tolerance service system is provided. Fig. 1 is a structural block diagram of a disaster tolerance service system according to an embodiment of the present invention. The system comprises a fault detection module 11, a server management module 12, a service install/uninstall module 13 and a service operation module 14, and the structure of the disaster tolerance service system is described in details below.

The fault detection module 11 is configured to detect whether a service and/or a service server for operating the service are/is in a fault state. The server management module 12 is coupled with the fault detection module 11 and configured to determine a disaster tolerance server for replacing the service server if a detection result of the fault detection module 11 is that the service and/or the service server for operating the service are/is in the fault state. The service install/uninstall module 13 is coupled with the fault detection module 11 and the server management module 12, and configured to install the service on the disaster tolerance server determined by the server management module 12, wherein the service is a service operated on the service server in the fault state detected by the fault detection module 11 and/or a service in the fault state detected by the fault detection module 11. The service operation module 14 is coupled with the service install/uninstall module 13 and configured to operate the service on the disaster tolerance server on which the service has been installed by the service install/uninstall module 13.

In related technologies, the disaster tolerance server performs disaster tolerance only for a specific service. In the embodiment of the present invention, the service is installed on the disaster tolerance server by the service install/uninstall module 13, thus extending the range of services for which the disaster tolerance server can perform disaster tolerance, improving the disaster tolerance reliability and reducing the cost spent on the disaster tolerance service system.

Preferably, the server management module 12 comprises an obtaining sub-module 121 and a determining sub-module 122, and the structure of the server management module 12 is described in details below.

The obtaining sub-module 121 is coupled with the fault detection module 11 and configured to obtain an idle disaster tolerance server when a detection result of the fault detection module 11 is that the service and/or the service server for operating the service are/is in the fault state. The determining sub-module 122 is coupled with the obtaining sub-module 121 and configured to determine the disaster tolerance server for replacing the service server according to a performance of the idle disaster tolerance server obtained by the obtaining sub-module 121.

In the present preferable embodiment, if the obtaining sub-module 121 obtains multiple idle disaster tolerance servers, then a disaster tolerance server with a best performance in all idle disaster tolerance servers is selected as the disaster tolerance server for replacing the service server. By doing so, a better disaster tolerance service can be provided for a malfunctioned service server, thus improving the disaster tolerance reliability.

It should be noted that, if the obtaining sub-module 121 only obtains one idle disaster tolerance server, then this disaster tolerance server is selected as the disaster tolerance server for replacing the service server. If the obtaining sub-module 121 does not obtain any idle disaster tolerance server, the fault detection module 11 sends alarm information to a state alarm module 17 to indicate that there is no idle disaster tolerance server which can be selected currently.

Preferably, the disaster tolerance service system further comprises a storage module 15, a state display module 16 and a state alarm module 17, and the structure of the disaster tolerance service system is described in details below.

The storage module 15 is configured to store state information of the service server and service information of the service, wherein the state information of the service server comprises at least one of the followings: state information for indicating that the service server operates normally, state information for indicating that the service server has an operation fault and state information for indicating that the service server is idle; the service information of the service comprises at least one of the followings: a service node of the service, a module number of the service, a service type of the service, a version of the service and a catalogue of the service. The state display module 16 is coupled with the storage module 15 and configured to display the state information of the service server and the service information of the service stored by the storage module 15. The state alarm module 17 is coupled with the fault detection module 11 and configured to generate an alarm when the detection result of the fault detection module 11 is that the service and/or the service server for operating the service are/is in the fault state.

In the present preferable embodiment, the state information of the service server and the service information of the service stored by the storage module 15 can be displayed by the state display module 16 to provide intuitive prompting information for a user so that the user can manage the disaster tolerance service system. The alarm generated by the state alarm module 17 can provide striking prompting information for the user so that the user can process the fault of the disaster tolerance service system.

Preferably, the service install/uninstall module 13 is further configured to uninstall the service from the service server in the fault state.

In the present preferable embodiment, the service is uninstalled from the service server in the fault state to recover the service server to a normal idle state. Subsequently, the service server is used as a new disaster tolerance server to realize recycling usage of the disaster tolerance server, thus further improving the disaster tolerance reliability and reducing the cost spent on the disaster tolerance service system.

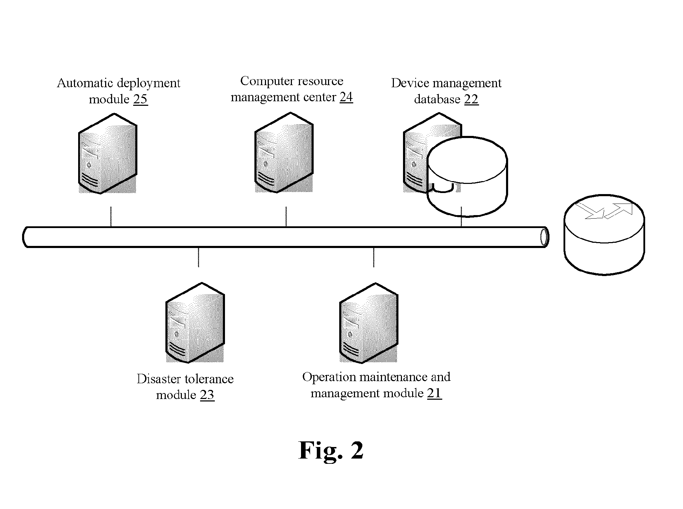

A preferable embodiment, which combines technical solutions of multiple preferable embodiments above, is provided and described in details below in combination with Fig. 2.

Fig. 2 is a schematic diagram of a disaster tolerance service system according to a preferable embodiment of the present invention. The disaster tolerance service system comprises an operation maintenance and management module 21 (corresponding to the state display module and the state alarm module above), a device management database 22 (corresponding to the storage module above), a disaster tolerance module 23 (corresponding to the fault detection module above), a computer resource management center 24 (corresponding to the server management module above) and an automatic deployment module 25 (corresponding to the service install/uninstall module above). The disaster tolerance service system is described in details below.

The operation maintenance and management module 21 is configured to display a state of each host computer and each service and is provided with functions such as related alarming etc. when a fault occurs in a device.

The device management database 22 is configured to store information of the device.

The disaster tolerance module 23 is configured to detect a state of the device and a state of a service, and perform a disaster tolerance function after a fault occurs in the service or the host computer.

The computer resource management center 24 is configured to manage a state and a disaster recovery function of each service server.

The automatic deployment module 25 is configured to install a service on respective service servers.

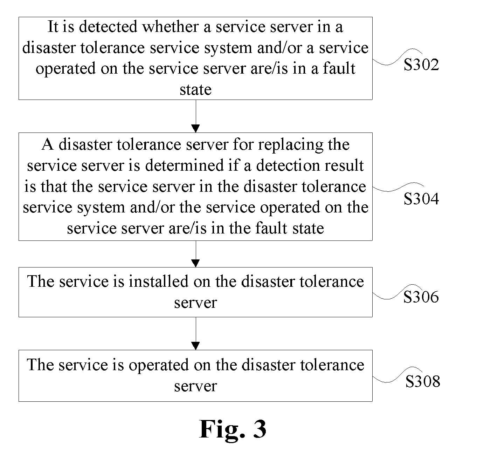

According to an embodiment of the present invention, a disaster tolerance method is also provided. Fig. 3 is a flowchart of a disaster tolerance method according to an embodiment of the present invention, comprising the following Step S302 to Step S308.

Step S302: It is detected whether a service server in a disaster tolerance service system and/or a service operated on the service server are/is in a fault state.

Step S304: A disaster tolerance server for replacing the service server is determined if a detection result is that the service server in the disaster tolerance service system and/or the service operated on the service server are/is in the fault state.

Step S306: The service is installed on the disaster tolerance server.

Step S308: The service is operated on the disaster tolerance server.

In related technologies, the disaster tolerance server performs disaster tolerance only for a specific service. In the embodiment of the present invention, the service is installed on the disaster tolerance server, thus extending the range of services for which the disaster tolerance server can perform disaster tolerance, to further improve the disaster tolerance reliability and reduce the cost spent on the disaster tolerance service system.

Preferably, determining the disaster tolerance server for replacing the service server comprises: an idle disaster tolerance server in the disaster tolerance service system is obtained; the disaster tolerance server for replacing the service server is determined according to a performance of the idle disaster tolerance server.

In the present preferable embodiment, if multiple idle disaster tolerance servers are obtained, then a disaster tolerance server with a best performance in all idle disaster tolerance servers is selected as the disaster tolerance server for replacing the service server. By doing so, a better disaster tolerance service can be provided for a malfunctioned service server, thus improving the disaster tolerance reliability.

It should be noted that, if only one idle disaster tolerance server is obtained, then the disaster tolerance server is selected as the disaster tolerance server for replacing the service server. If no idle disaster tolerance server is obtained, alarm information will be sent to indicate that there is no idle disaster tolerance server which can be selected currently.

Preferably, before it is detected whether the service server in the disaster tolerance service system and/or the service operated on the service server are/is in the fault state, the method further comprises: state information of the service server and service information of the service are stored, wherein the state information of the service server comprises at least one of the followings: state information for indicating that the service server operates normally, state information for indicating that the service server has an operation fault and state information for indicating that the service server is idle; the service information of the service comprises at least one of the followings: a service node of the service, a module number of the service, a service type of the service, a version of the service and a catalogue of the service.

Preferably, before it is detected whether the service server in the disaster tolerance service system and/or the service operated on the service server are/is in the fault state, the state information of the service server and the service information of the service are displayed.

Preferably, after it is detected whether the service server in the disaster tolerance service system and/or the service operated on the service server are/is in the fault state, an alarm is generated when the detection result is that the service server in the disaster tolerance service system and/or the service operated on the service server are/is in the fault state.

In the present preferable embodiment, the stored state information of the service server and the stored service information of the service can be used for state display to provide intuitive prompting information for a user, so that the user can manage the disaster tolerance service system. Generating the alarm can provide striking prompting information for the user so that the user can process the fault of the disaster tolerance service system.

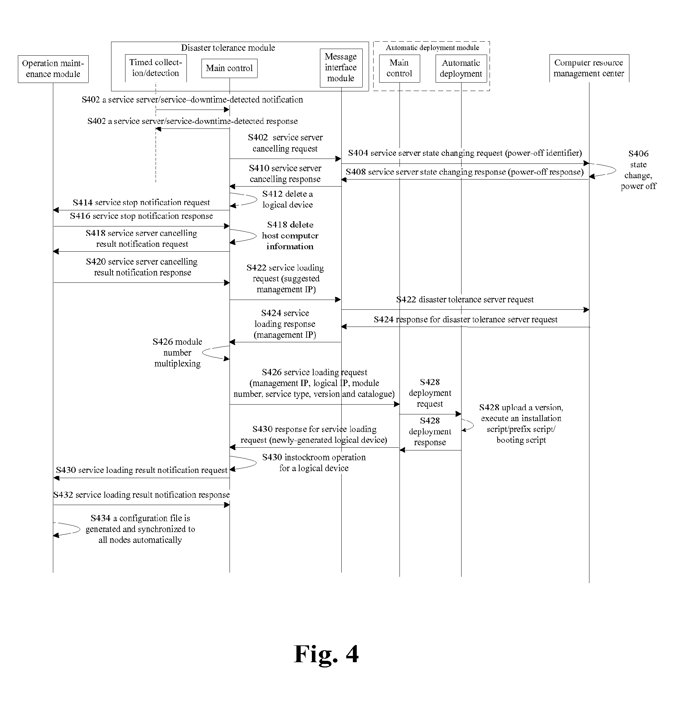

A preferable embodiment, which combines technical solutions of multiple preferable embodiments above, is provided and described in details below in combination with Fig. 4.

Fig. 4 is an interaction flowchart of a disaster tolerance method according to a preferable embodiment of the present invention. The disaster tolerance method comprises the following Step S400 to Step S434.

Step S400: Each module operates normally. A device is powered on, and system software such as an operation system and a device management database etc. is installed. Basic network configuration is completed. A management Internet Protocol (IP) and a management account password (generally a root password) are configured for each host computer, and installation of a disaster tolerance center is completed. Currently, there are several idle disaster tolerance servers which have been registered successfully at the disaster tolerance center. The disaster tolerance center is set to an automatic disaster tolerance mode. The disaster tolerance center performs interaction with each service server via a heartbeat message to determine whether a state of each service server is normal.

Step S402: A disaster tolerance module performs heartbeat detection with each service server via a secure protocol (Secure Shell, SSH), wherein a heartbeat time is generally 10 seconds each time (settable). After receiving a response indicating that the service server is normal, the disaster tolerance module performs enquiry in a set time interval; after a failure is returned by the enquiry, the disaster tolerance module performs the enquiry according to the time interval over again. It is considered that the state of the service server is abnormal after performing the enquiry for three times (settable). The disaster tolerance module sends a service server cancelling request to a message interface module.

Step S404: After receiving the service server cancelling request, the message interface module sends a service server state changing request to a computer resource management center, wherein the service server state changing request carries a power-off identifier.

Step S406: The computer resource management center changes the state of the service server and turns the power of the service server off. If the state of the service server is normal but a service on the current service server has a problem, related operations such as uninstalling the service and deleting IP information etc. are performed on the service server. If the problem occurs on the service server, a related deleting operation will be performed after the next recovery of the service server and before the re-installing of the service.

Step S408: After performing the related operations, the computer resource management center sends a service server state changing response to the message interface module, wherein the service server state changing response carries a power-off response.

Step S410: After receiving the response from the computer resource management center, the message interface module sends a service server cancelling response to the disaster tolerance module.

Step S412: After receiving the service server cancelling response, the disaster tolerance module performs operations on the device management database and deletes related service information (e.g. a service node and a module number etc.).

Step S414: The disaster tolerance module sends a notification request for stopping the service to an operation maintenance and management module, so as to notify the operation maintenance and management module to display stopping of the service corresponding to the related service information on a page.

Step S416: After receiving the notification of the disaster tolerance module, the operation maintenance and management module changes the state of the service to a stop state on a page and sends a notification response for stopping the service to the disaster tolerance module after the changing is completed.

Step S418: After receiving the notification response for stopping the service, the disaster tolerance module deletes the information of the service server in the device management database, and after the deletion, sends a service server cancelling result notification request to the operation maintenance and management module.

Step S420: The operation maintenance and management module changes the state of the service server to a fault state and simultaneously sends a service server fault result notification response to the disaster tolerance module.

Step S422: After the steps above are performed, the disaster tolerance module detects the states of the disaster tolerance servers, and sends alarm information (there is no idle disaster tolerance server currently) to the operation maintenance and management module if there is no idle disaster tolerance server currently. If there are multiple idle disaster tolerance servers, the disaster tolerance module performs judgment, checks the disaster tolerance server with the best performance in all disaster tolerance servers and uses the disaster tolerance server with the best performance as the selected disaster tolerance server. If there is only one idle disaster tolerance server currently, disaster tolerance is performed only on this disaster tolerance server. After the idle disaster tolerance server is selected, the disaster tolerance module sends a service loading request to the message interface module. The message interface module sends a disaster tolerance server request of the idle disaster tolerance server to the computer resource management center.

Step S424: After obtaining the current idle disaster tolerance server through searching, the computer resource management center returns a response for the disaster tolerance server request to the message interface module, and the message interface module sends a service loading response to the disaster tolerance module.

Step S426: After receiving the service loading response, the disaster tolerance module performs module number multiplexing and then sends a reason module number and the service loading request (management IP, logical IP, module number, service type, version and catalogue) to an automatic deployment module.

Step S428: The automatic deployment module uploads a version on the idle disaster tolerance server according to the service loading request, executes an installation script, starts the script automatically, returns a deployment success response after the script is started successfully and performs Step S430. If the deployment fails due to the disaster tolerance server, the service and related files are deleted on the failed disaster tolerance server and a deployment failure response is returned at the same time; subsequently, the automatic deployment module returns a service loading failure response to the disaster tolerance module and the disaster tolerance module continues to select an idle disaster tolerance server via Step S420 over again.

Step S430: The automatic deployment module returns a service loading success response to the disaster tolerance module. The disaster tolerance module performs instockroom operation for a logical device and a physical device, and sends a service loading result notification request to the operation maintenance and management module simultaneously.

Step S432: After receiving the service loading result notification request, the operation maintenance and management module performs related display on the page and returns a service loading result notification response to the disaster tolerance module simultaneously.

Step S434: A configuration file is generated and synchronized to all nodes automatically.

To sum up, according to the embodiments above of the present invention, a service is installed on a disaster tolerance server to extend the range of services for which the disaster tolerance server can perform disaster tolerance, thus solving the problem in related technologies that a disaster tolerance service system adopting a one-to-one disaster tolerance mode is incapable of ensuring sufficient disaster tolerance ability for each service, and improving the disaster tolerance reliability. In addition, the disaster tolerance mode of the embodiments of the present invention does not confine the disaster tolerance to a specific environment, and the disaster tolerance can be performed for any service in any environments such as a server etc., thus greatly reducing the cost spent on the disaster tolerance service system.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations.

## Claims

1. A disaster tolerance service system, **characterized by** comprising:
a fault detection module (11), configured to detect whether a service and/or a service server for operating the service are/is in a fault state;
a server management module (12), configured to determine a disaster tolerance server for replacing the service server if a detection result is that the service and/or the service server for operating the service are/is in the fault state, wherein the disaster tolerance server performs disaster tolerance, wherein the server management module (12) comprises: an obtaining sub-module, configured to obtain an idle disaster tolerance server; and a determining sub-module, configured to determine the disaster tolerance server for replacing the service server according to a performance of the idle disaster tolerance server;
a service install/uninstall module (13), configured to install the service on the disaster tolerance server; and
a service operation module (14), configured to operate the service on the disaster tolerance server.

2. The disaster tolerance service system according to claim 1, **characterized by** further comprising:
a storage module, configured to store state information of the service server and service information of the service,
wherein the state information of the service server comprises at least one of the followings: state information for indicating that the service server operates normally, state information for indicating that the service server has an operation fault and state information for indicating that the service server is idle;
the service information of the service comprises at least one of the followings: a service node of the service, a module number of the service, a service type of the service, a version of the service and a catalogue of the service.

3. The disaster tolerance service system according to claim 2, **characterized by** further comprising:
a state display module, configured to display the state information of the service server and the service information of the service; and
a state alarm module, configured to generate an alarm when the detection result is that the service and/or the service server for operating the service are/is in the fault state.

4. The disaster tolerance service system according to claim 3, **characterized in that** the service install/uninstall module (13) is further configured to uninstall the service from the service server in the fault state.

5. A disaster tolerance method, **characterized by** comprising:
detecting whether a service server in a disaster tolerance service system and/or a service operated on the service server are/is in a fault state (S302);
determining a disaster tolerance server for replacing the service server if a detection result is that the service server in the disaster tolerance service system and/or the service operated on the service server are/is in the fault state, wherein the disaster tolerance server performs disaster tolerance (S304), wherein determining the disaster tolerance server for replacing the service server comprises: obtaining an idle disaster tolerance server in the disaster tolerance service system; determining the disaster tolerance server for replacing the service server according to a performance of the idle disaster tolerance server;
installing the service on the disaster tolerance server (S306);
operating the service on the disaster tolerance server (S308).

6. The method according to claim 5, **characterized in that** before detecting whether the service server in the disaster tolerance service system and/or the service operated on the service server are/is in the fault state, the method further comprises:
storing state information of the service server and service information of the service,
wherein the state information of the service server comprises at least one of the followings: state information for indicating that the service server operates normally, state information for indicating that the service server has an operation fault and state information for indicating that the service server is idle;
the service information of the service comprises at least one of the followings: a service node of the service, a module number of the service, a service type of the service, a version of the service and a catalogue of the service.

7. The method according to claim 6, **characterized in that** before detecting whether the service server in the disaster tolerance service system and/or the service operated on the service server are/is in the fault state, the method further comprises:
displaying the state information of the service server and the service information of the service.

8. The method according to claim 6, **characterized in that** after detecting whether the service server in the disaster tolerance service system and/or the service operated on the service server are/is in the fault state, the method further comprises: generating an alarm when the detection result is that the service server in the disaster tolerance service system and/or the service operated on the service server are/is in the fault state.

## Patentansprüche

1. Katastrophentoleranzdienstsystem, **gekennzeichnet durch** das Umfassen:
- eines Störungsdetektionsmoduls (11), welches dazu ausgebildet ist, zu detektieren, ob sich ein Dienst und/oder ein Dienstserver für den Betrieb des Dienstes in einem Störungszustand befindet/befinden;
- eines Serververwaltungsmoduls (12), das dazu ausgebildet ist, einen Katastrophentoleranzserver für den Austausch des Dienstservers zu bestimmen, wenn ein Detektionsergebnis ist, dass sich der Dienst und/oder der Dienstserver für den Betrieb des Dienstes sich in einem Störungszustand befindet/befinden, wobei der Katastrophentoleranzserver Katastrophentoleranz durchführt, wobei das Serververwaltungsmodul (12) umfasst: ein Beschaffungsuntermodul, das dazu ausgebildet ist, einen Leerlaufkatastrophentoleranzserver zu beschaffen und ein Bestimmungsuntermodul, das dazu ausgebildet ist, gemäß einer Leistung des Leerlaufkatastrophentoleranzservers den Katastrophentoleranzserver für den Austausch des Dienstservers zu bestimmen;
- ein Dienstinstallations-/ Dienstadeinstallationsmodul (13), das dazu ausgebildet ist, den Dienst auf dem Katastrophentoleranzserver zu installieren; und
- ein Dienstbetriebsmodul (13), das dazu ausgebildet ist, den Dienst auf dem Katastrophentoleranzserver zu betreiben.

2. Katastrophentoleranzdienstsystem nach Anspruch 1, **gekennzeichnet dadurch, dass** es weiter umfasst:
ein Speichermodul, welches dazu ausgebildet ist, Zustandsinformationen des Dienstservers und Dienstinformationen des Dienstes zu speichern, wobei die Zustandsinformationen des Dienstservers zumindest eines der folgenden umfassen: Zustandsinformationen zum Anzeigen, dass der Dienstserver normal betrieben wird, Zustandsinformationen zum Anzeigen, dass der Dienstserver eine Betriebsstörung hat und Zustandsinformationen zum Anzeigen, dass sich der Dienstserver im Leerlauf befindet;
die Dienstinformationen des Dienstes umfassen zumindest eines der folgenden: einen Dienstknoten des Dienstes, eine Modulnummer des Dienstes, einen Diensttyp des Dienstes, eine Version des Dienstes und einen Katalog des Dienstes.

3. Katastrophentoleranzdienstsystem nach Anspruch 2, **gekennzeichnet dadurch, dass** es weiter umfasst:
- ein Zustandsanzeigemodul, welches dazu ausgebildet ist, die Zustandsinformationen des Dienstservers und die Dienstinformationen des Dienstes anzuzeigen; und
- ein Zustandsalarmmodul, welches dazu ausgebildet ist, einen Alarm zu erzeugen, wenn das Detektionsergebnis ist, dass sich der Dienst und/oder der Dienstserver zum Betrieb des Dienstes in dem Störungszustand befindet/befinden.

4. Katastrophentoleranzdienstsystem nach Anspruch 3, **dadurch gekennzeichnet, dass** das Dienstinstallations-/Dienstdeinstallationsmodul (13) weiter dazu ausgebildet ist, den Dienst von dem Dienstserver, der sich in dem Störungszustand befindet, zu deinstallieren.

5. Katastrophentoleranzverfahren, **dadurch gekennzeichnet** das es umfasst:
- Detektieren, ob sich ein Dienstserver in einem Diensttoleranzsystem und/oder ein Dienst, der auf dem Dienstserver betrieben wird, in einem Störungsszustand befindet/befinden (S302);
- Bestimmen eines Katastrophentoleranzservers zum Austausch des Dienstservers, wenn ein Detektionsergebnis ist, dass sich der Dienstserver in dem Katastrophentoleranzdienstsystem und/oder der Dienst, der auf dem Dienstserver betrieben wird, in dem Störungszustand befindet/befinden, wobei der Katastrophentoleranzserver Katastrophentoleranz durchführt, wobei das Bestimmen des Katastrophentoleranzservers zum Austausch des Dienstservers umfasst: Beschaffen eines Leerlaufkatastrophentoleranzservers in dem Katastrophentoleranzsystem; Bestimmen des Katastrophentoleranzservers zum Austausch des Dienstservers gemäß einer Leistung des Leelaufkatastrophentoleranzservers;
- Installieren des Dienstes auf dem Katastrophentoleranzserver (S306);
- Betreiben des Dienstes auf dem Katastrophentoleranzserver (S308).

6. Verfahren nach Anspruch 5, **dadurch gekennzeichnet, dass** vor dem Bestimmen, ob sich der Dienstserver in dem Katastrophentoleranzdienstsystem und/oder der Dienst, der auf dem Dienstserver ausgeführt wird, in dem Störungszustand befindet/befinden, das Verfahren weiter umfasst:
Speichern von Zustandsinformationen des Dienstservers und von Dienstinformationen des Dienstes,
wobei die Zustandsinformationen des Dienstservers zumindest eines der folgenden umfasst: Zustandsinformationen zu Anzeigen, dass der Dienstserver normal betrieben wird, Zustandsinformationen zum Anzeigen, dass der Dienstserver eine Betriebsstörung hat und Zustandsinformationen zum Anzeigen, dass sich der Dienstserver im Leerlauf befindet;
die Dienstinformationen des Dienstes umfassen zumindest eines der folgenden: einen Dienstknoten, eine Modulnummer des Dienstes, einen Diensttyp des Dienstes, eine Version des Dienstes und einen Katalog des Dienstes.

7. Verfahren nach Anspruch 6, **gekennzeichnet dadurch, dass** das Verfahren vor dem Detektieren, ob sich der Dienstserver in dem Katastrophentoleranzdienstsystem und/oder der Dienst, der auf dem Dienstserver betrieben wird, in dem Störungszustand befindet/befinden, weiter umfasst: Anzeigen der Zustandsinformationen des Dienstservers und der Dienstinformationen des Dienstes.

8. Verfahren nach Anspruch 6, **dadurch gekennzeichnet, dass** das Verfahren nach dem Detektieren, ob sich der Dienstserver in dem Katastrophentoleranzdienstsystem und/oder der Dienst, der auf dem Dienstserver betrieben wird, in dem Störungszustand befindet/befinden, weiter umfasst: Erzeugen eines Alarms, wenn das Detektionsergebnis ist, dass sich der Dienstserver in dem Katastrophentoleranzdienstsystem und/oder der Dienst, der auf dem Dienstserver betrieben wird, in einem Störungszustand befindet/befinden.

## Revendications

1. Système de service tolérant aux sinistres, **caractérisé en ce qu'**il comprend :
- un module de détection d'anomalie (11), configuré de manière à détecter si un service et/ou un serveur de service destiné à exploiter le service est/sont dans un état d'anomalie ;
- un module de gestion de serveur (12), configuré de manière à déterminer un serveur tolérant aux sinistres destiné à remplacer le serveur de service, si un résultat de détection indique que le service et/ou le serveur de service destiné à exploiter le service est/sont dans l'état d'anomalie, dans lequel le serveur tolérant aux sinistres met en oeuvre une tolérance aux sinistres, dans lequel le module de gestion de serveur (12) comprend : un sous-module d'obtention, configuré de manière à obtenir un serveur tolérant aux sinistres au repos ; et un sous-module de détermination, configuré de manière à déterminer le serveur tolérant aux sinistres destiné à remplacer le serveur de service, selon les performances du serveur tolérant aux sinistres au repos ;
- un module d'installation/désinstallation de service (13), configuré de manière à installer le service sur le serveur tolérant aux sinistres ; et
- un module d'exploitation de service (14), configuré de manière à exploiter le service sur le serveur tolérant aux sinistres.

2. Système de service tolérant aux sinistres selon la revendication 1, **caractérisé en ce qu'**il comprend en outre :
- un module de stockage, configuré de manière à stocker des informations d'état du serveur de service et des informations de service du service ;
- dans lequel les informations d'état du serveur de service comportent au moins l'une des informations suivantes : des informations d'état destinées à indiquer que le serveur de service fonctionne normalement, des informations d'état destinées à indiquer que le serveur de service présente une anomalie de fonctionnement, et des informations d'état destinées à indiquer que le serveur de service est au repos ;
- les informations de service du service comportent au moins l'un des éléments suivants : un noeud de service du service, un numéro de module du service, un type de service du service, une version du service et un catalogue du service.

3. Système de service tolérant aux sinistres selon la revendication 2, **caractérisé en ce qu'**il comprend en outre :
- un module d'affichage d'état, configuré de manière à afficher les informations d'état du serveur de service et les informations de service du service ; et
- un module d'alerte d'état, configuré de manière à générer une alerte lorsque le résultat de détection indique que le service et/ou le serveur de service destiné à exploiter le service est/sont dans l'état d'anomalie.

4. Système de service tolérant aux sinistres selon la revendication 3, **caractérisé en ce que** le module d'installation/désinstallation de service (13) est en outre configuré de manière à désinstaller le service du serveur de service dans l'état d'anomalie.

5. Procédé de tolérance aux sinistres, **caractérisé en ce qu'**il comprend les étapes ci-dessous consistant à :
- détecter si un serveur de service dans un système de service tolérant aux sinistres et/ou un service exploité sur le serveur de service est/sont dans un état d'anomalie (S302) ;
- déterminer un serveur tolérant aux sinistres destiné à remplacer le serveur de service, si un résultat de détection indique que le serveur de service dans le système de service tolérant aux sinistres et/ou le service exploité sur le serveur de service est/sont dans l'état d'anomalie, dans lequel le serveur tolérant aux sinistres met en oeuvre une tolérance aux sinistres (S304), dans lequel l'étape consistant à déterminer le serveur tolérant aux sinistres destiné à remplacer le serveur de service consiste à : obtenir un serveur tolérant aux sinistres au repos dans le système de service tolérant aux sinistres ; déterminer le serveur tolérant aux sinistres destiné à remplacer le serveur de service, selon les performances du serveur tolérant aux sinistres au repos ;
- installer le service sur le serveur tolérant aux sinistres (S306) ;
- exploiter le service sur le serveur tolérant aux sinistres (S308).

6. Procédé selon la revendication 5, **caractérisé en ce que**, avant de détecter si le serveur de service dans le système de service tolérant aux sinistres et/ou le service exploité sur le serveur de service est/sont dans l'état d'anomalie, le procédé comprend en outre les étapes ci-dessous consistant à :
- stocker des informations d'état du serveur de service et des informations de service du service ;
- dans lequel les informations d'état du serveur de service comportent au moins l'une des informations suivantes : des informations d'état destinées à indiquer que le serveur de service fonctionne normalement, des informations d'état destinées à indiquer que le serveur de service présente une anomalie de fonctionnement, et des informations d'état destinées à indiquer que le serveur de service est au repos ;
- les informations de service du service comportent au moins l'un des éléments suivants : un noeud de service du service, un numéro de module du service, un type de service du service, une version du service et un catalogue du service.

7. Procédé selon la revendication 6, **caractérisé en ce que**, avant de détecter si le serveur de service dans le système de service tolérant aux sinistres et/ou le service exploité sur le serveur de service est/sont dans l'état d'anomalie, le procédé comprend en outre l'étape consistant à : afficher les informations d'état du serveur de service et les informations de service du service.

8. Procédé selon la revendication 6, **caractérisé en ce que**, après avoir détecté si le serveur de service dans le système de service tolérant aux sinistres et/ou le service exploité sur le serveur de service est/sont dans l'état d'anomalie, le procédé comprend en outre l'étape consistant à : générer une alerte lorsque le résultat de détection indique que le serveur de service dans le système de service tolérant aux sinistres et/ou le service exploité sur le serveur de service est/sont dans l'état d'anomalie.
